# EUROPEAN PATENT APPLICATION

(11) **EP 4 714 764 A1**
(43) Date of publication of application: **25.03.2026**
(21) Application number: 24201877.8
(22) Date of filing: 23.09.2024
(51) Int. Cl.: B60T 17/08, F16D 65/28

(54) **SPRING BRAKE ACTUATOR WITH INTEGRATED RELEASE BOLT NOT REQUIRING INTERFACE NUT**

(71) Applicant: ZF CV Systems Europe BV, 1170 Brüssel (BE)
(72) Inventor: FLISEK, Filip, 51-180 Wroclaw (PL)
(74) Representative: Schäferjohann, Volker

(57) **Abstract**

The invention relates to a brake release mechanism (24) for a spring brake actuator (2), in particular a parking or emergency spring brake actuator (2) for use in a commercial vehicle (1), wherein the spring brake actuator comprises a spring brake piston assembly (8) and an actuator power spring (6) configured to push the spring brake piston assembly (8) from a retracted position towards an extended position, said brake release mechanism (24) comprising a brake release bolt (30) that is configured to be rotatably mounted to the spring brake actuator (2), having a first bolt portion (31) that is configured to extend inside of the spring brake actuator, and a second bolt portion (32) that is configured to extend outside of the spring brake actuator (2), said first bolt portion (31) comprising a threaded portion (34), and the second bolt portion (32) comprising an operating section for operating the brake release bolt (30) when mounted to the spring brake actuator (2), and a running nut (12) engaging the threaded portion (34), said running nut (12) being configured to axially travel along the threaded portion (34) in order to move a spring brake piston assembly (8) against the actuator power spring (6). It is proposed that the operating section is a tool interface (14) that is integrally formed on the brake release bolt (30).

## Description

The invention relates to a brake release mechanism for a spring brake actuator, in particular a parking or emergency spring brake actuator for use in a commercial vehicle, wherein the spring brake actuator comprises a spring brake piston assembly and an actuator power spring configured to push the spring brake piston assembly from a retracted position towards an extended position, said brake release mechanism comprising a brake release bolt that is configured to be mounted to the spring brake actuator, preferably to a housing base thereof, having a first bolt portion that is configured to extend inside of the spring brake actuator, and a second bolt portion that is configured to extend outside of the spring brake actuator, said first bolt portion comprising a threaded portion, and the second bolt portion comprising an operating section for operating the brake release bolt when mounted to the spring brake actuator, and a running nut engaging the threaded portion, said running nut being configured to axially travel along the threaded portion in order to move the spring brake piston assembly against the actuator power spring.

Brake release mechanisms for spring brake actuators are generally known in the art. It is the function of such release mechanisms to release a spring brake actuator, i.e. to return the actuator power spring to its retracted position, for example in case of pneumatic systems malfunctions. In known brake release mechanisms, the actuator is released by rotating its brake release bolt. Such brake release bolts comprise a threaded portion on which a running nut is engaged. The running nut is restricted from rotation, so it may only move axially. Thus, rotating the release bolt leads to an axial movement of the running nut. The axial movement of the running nut is then utilized to engage and move the spring brake actuator piston against the force exerted by the actuator power spring to release the spring brake actuator and the wheel brake as such.

It has been known to attach an interface nut to the operating section of the brake release bolt in order to allow the afroremention rotation thereof. These interface nuts and operating sections each comprise a bore section that form a common bore when the interface nut is attached to the operating section in the correct position. After having aligned the interface nut to the operating section, a retaining element in the form of a locking pin is inserted in said bore. The retaining element engages both parts and locks the interface nut to the release bolt.

A release bolt mechanism of the type mentioned above is known from EP 4279349 A1, inter alia. EP 4279349 A1 suggests to improve the durability of the release mechanism by creating an axially oriented blind bore, the crossection of which extends partially in the interface nut and partially in the release bolt, and to press one or more locking balls into this bore. While this method yields good results regarding the mechanical stability of the operating section, and achieves higher cost efficiency compared to prior designs due to the use of locking balls, the effort and time to produce this type of interference fit is still substantial, and the desire to improve upon this remains.

It was therefore an object of the invention to provide a brake release mechanism for a spring brake actuator that overcomes the above-mentioned issues as far as possible. In particular, it was an object of the invention to provide a brake release mechanism that allows for more efficient production and installation without compromising the durability of the release mechanism.

The invention attains this object by suggesting that the operating section is a tool interface that is integrally formed on the brake release bolt. It has been found that one of the more time-consuming and costly measures is the provision of the bore itself, since the materials used are typically hardened and/or otherwise high-strength steel alloys, and the creation of the bore in these materials requires significant manufacturing time and tooling costs. Providing the operating section as a one-piece portion of the bolt itself, however, can be effected prior to heat treatment of the bolt, i.e. when the material is still comparatively soft. Also, having the operating interface as an integral part of the bolt, there is no longer any need to keep an inventory of matching interface nuts to the bolt, and also no need to keep an inventory of retaining elements such as the locking balls mentioned above. The new release bolt is thus cheaper and quicker to manufacture, while at the same time, installation of the release mechanism on the actuator can be completed faster.

In a preferred embodiment, the tool interface comprises a number of force application surfaces that are configured to engage a corresponding torque-inducing tool for driving the release bolt, wherein the force application surfaces are formed as recesses in the brake release bolt. The force application surfaces are preferably arranged such that a pair of opposing surfaces are oriented essentially parallel to one another, such that a wrench or any other conventional torque-inducing tool like for example a power tool may be used to drive the brake release bolt once attached to the tool interface.

In a further preferred embodiment, the tool interface has a polygonal, preferably hexagonal, cross section.

In a further preferred embodiment, the brake release bolt has a mounting portion in between the first bolt portion and the second bolt portion, said mounting portion comprising a circumferential groove that is configured to accommodate a retaining element that is effective to axially secure the release bolt to the spring brake actuator.

Preferably, the mounting portion is positioned on the brake release bolt such that the groove is aligned with an end face of the housing base of the spring brake actuator. In preferred embodiments, the spring brake actuator may comprise a boss at the housing base to provide the required mechanical rigidity for accepting the considerable axial forces during operation of the spring brake actuator.

In a further preferred embodiment, the retaining element is a retaining ring or retaining disc. These types of retaining elements are easily available, and provide a low-cost, yet highly reliable axial fastening mechanism for the brake release bolt on the spring brake actuator. Preferably, the retaining ring or retaining disc, when installed, abuts against the housing base from the outside of the spring brake actuator.

In a further preferred embodiment, the tool interface is forged and/or machined. Preferably, the shape of the tool interface can be introduced into the release bolt prior to any temperature treatment of the release bolt, such as prior to hardening the release bolt.

In a further preferred embodiment, the first bolt portion and/or mounting portion comprises a maximum diameter of the release bolt, and the tool interface defines a width across flat that is smaller than the maximum diameter, wherein preferably, the maximum diameter is at least 8% larger than the corner-to-corner width, particularly preferred 10% or more.

The invention has herein above been described in a first aspect with respect to the brake release mechanism itself. In a second aspect, the invention further relates to a spring brake actuator, in particular, a parking or emergency spring brake actuator for use in a commercial vehicle, said actuator comprising an actuator housing having an actuator housing base, a spring brake piston assembly located in said actuator housing for applying a braking force, an actuator power spring located between the actuator housing base and the spring brake piston assembly, said actuator power spring being effective to push the spring brake piston away from the base.

The invention attains the object mentioned herein above also according to the second aspect by suggesting that the spring brake piston assembly is coupled to the actuator housing through a brake release mechanism according to any one of the preferred embodiments described herein above for the first aspect.

The invention makes use of the same realizations and has the same benefits as the brake release mechanism of the first aspect. Accordingly, preferred embodiments of the brake release mechanism of the first aspect are at the same time also preferred embodiments of the spring brake actuator of the second aspect and vice versa.

To avoid unnecessary repetition, reference is made to the description herein above in that regard.

In a preferred embodiment, the brake release mechanism is provided with a mounting portion in between the first bolt portion and the second bolt portion, said mounting portion comprising a circumferential groove that is configured to accommodate a retaining element that is effective to axially secure the release bolt to the spring actuator, wherein preferably, the retaining element is a retaining ring or retaining disc, and the mounting portion of the release bolt extends through a correspondingly shaped passage in the actuator housing, preferably the actuator housing base, and is axially secured to the actuator housing with the retaining element. The passage for the brake release bolt preferably has a cylindrical outer shape in the mounting portion, and the passage is formed as a corresponding through-hole which rotatably guides the brake release bolt. The passage may be formed in a/the boss provided on the housing base. The aspects of the disclosure may best be understood from the following detailed description taken in conjunction with the accompanying figures. The figures are schematic and simplified for clarity, and they just show details to improve the understanding of the claims while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereafter, which show in:
- Figs. 1, 2:: a preferred embodiment of a spring brake actuator according to the concept of the invention in sectional views; and
- Fig. 3:: a brake release mechanism for a spring brake actuator according to the preferred embodiment in a sectional view.

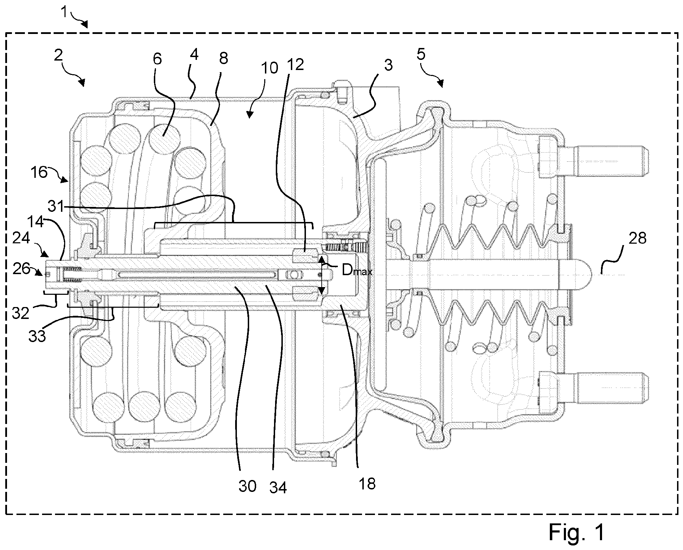

Fig. 1 shows a spring brake actuator 2 having an actuator housing 4.

The spring brake actuator 2 comprises, on the left in Fig. 1, a spring portion which is mounted to a flange portion 3. On the opposite side of the flange portion 3, the spring brake actuator 2 comprises a service brake portion 5 which operates in a generally known manner. For the sake of brevity, no detailed description of the service brake portion 5 is necessary and thus omitted.

Inside the actuator housing 4, an actuator power spring 6 and a pressure chamber 10 are located. The power spring 6, which rests on the left side in Fig. 1 against an actuator housing base 16 and on the opposite side on a spring brake piston assembly 8, is in Fig. 1 held in the release position by positive pressure inside the pressure chamber 10. The spring brake piston assembly 8 is adapted to transmit the inflicted force to a ram 18 which in turn transmits the applied power to the wheel brakes (not shown).

Furthermore, the spring brake actuator 2 comprises a brake release mechanism 24. The brake release mechanism 24 is configured to release the spring brake actuator 2. The brake release mechanism 24 comprises a rotatable brake release bolt 30 which is configured to be inserted in the ram 18. The brake release bolt 30 comprises a threaded portion 34 which engages a threaded running nut 12. The running nut 12 is guided non-rotatably inside said ram 18.

Upon rotation of the brake release bolt 30, the running nut 12 moves along the threaded portion 34 and thus axially along the brake release bolt 30. In a scenario where the spring brake piston assembly 8 is in an extended position, caused by the power spring 6, the running nut 12 is adapted to engage and move the spring brake piston assembly 8 against a force of the actuator power spring 6 towards its retracted state, thereby compressing the power spring 6. In other words, when the running nut 12 moves towards the actuator housing base 16, it forces the spring brake piston assembly 8 towards the actuator housing base 16, thereby compressing the actuator power spring 6. This, in consequence, releases the spring brake actuator 2.

An indicator pin 26 is moveable within an axial direction 28. The indicator pin 26 is configured to indicate, preferably by protruding outwards from the housing base, whenever the release bolt 30 engages the spring brake actuator piston assembly 8 in order to release the brake actuator.

The brake release bolt 30 comprises an operating section.

The brake release bolt 30 consists of several bolt portions. Among those, the release bolt 30 comprises a first bolt portion 31 extending inside the actuator housing 4. The release bolt 30 further comprises an opposite second bolt portion 32 extending outside of the actuator housing 4, and a third bolt portion 33 extending partly outside and partly inside the actuator housing 4.

The first bolt portion 31 comprises a threaded portion 34 which engages the running nut 12 such that upon rotational movement of the release bolt 30, the running nut 12 moves axially in the direction 28 as a function of the sense of rotation of the release bolt 30.

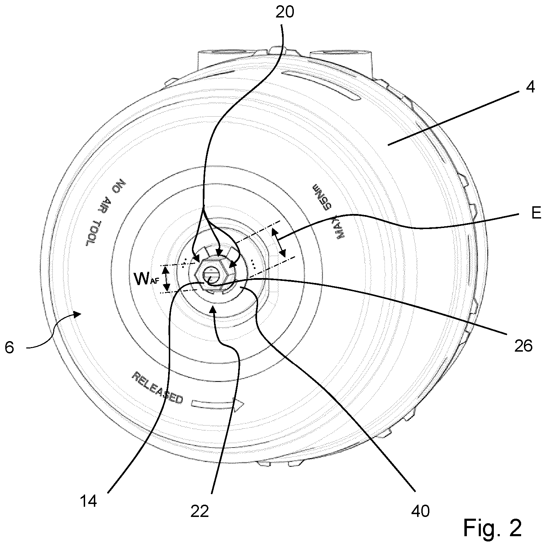

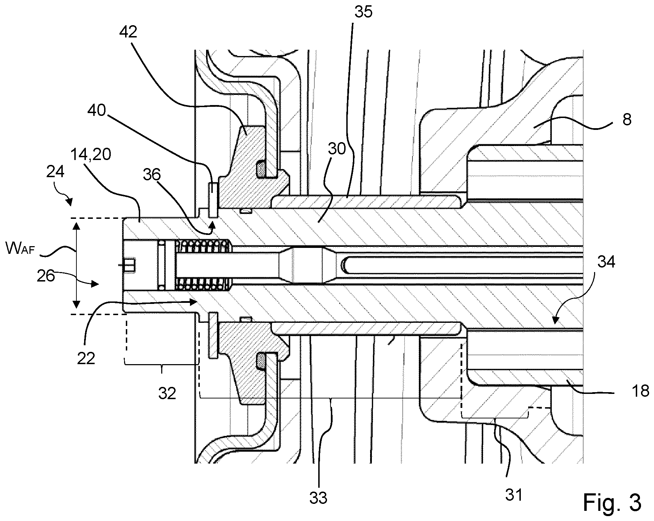

The second bolt portion 32 comprises an operating section which in this embodiment is formed as a tool interface 14, and which is shown in more detail in Figs. 2 and 3.

The tool interface 14 shown in Figs. 1-3 may be provided by forging or by machining the release bolt 30, and this may be conducted prior to hardening the release bolt 30 during manufacture to achieve a higher efficiency as compared to manipulating an already hardened release bolt 30 (which was typical in prior art systems). Due to the comparatively higher tolerances of the outside dimensions of the tool interface regarding the need to accommodate a wrench or similar tool for inducing torque, potential deformations of the outer contour of the tool interface during temperature treatment of the release bolt 30 do not have a significant impact on the ability to induce torque.

The third bolt portion 33 is a mounting portion and is configured to axially secure the release bolt 30 to the actuator housing 4. Specifically, as is shown in more detail in Fig. 3, the housing base 16 of the actuator housing 4 comprises a boss 42 which comprises a bolt passage 22 into which the release bolt 30 is rotatably inserted. The release bolt 30 comprises, in the third bolt portion, the so-called mounting portion 33, an annular, i.e. circumferential groove 36, and a retaining element 40 in the shape of a retaining disc or retaining ring is inserted into the groove 36 such as to axially secure the release bolt 30 to the actuator housing 4.

As shown in Fig. 3, a guiding sleeve 35 is mounted around the release bolt 30 within the mounting portion 33. The retaining element 40 and the guiding sleeve 35 cooperate in axially securing the release bolt 30 to the actuator housing 4. However, alternative mechanical elements might be used instead of the sleeve, as well, as long as the release bolt 30 is sufficiently guided and secured against pivoting. A limiting amount of pivoting may however be tolerable.

As can be seen from Fig. 3 in combination with Fig. 2, the tool interface 14 comprises a plurality of mutually opposite parallel force application surfaces 20 which are configured to be engaged by a torque-inducing tool such as a wrench or a power tool (not shown) in order to impart a rotational movement onto the release bolt 30. In the embodiment shown in Figs. 1-3, the tool interface 14 has the shape of a hexagon, optionally with rounded and/or chamfered edges.

The tool interface 14 defines a width across flat W_{af} in the second bolt portion 32. In the first bolt portion 31, the release bolt 30 defines a maximum diameter Dₘₐₓ. In the embodiment shown, the maximum diameter Dₘₐₓ is located at the rightmost end of the first bolt portion 31 and acts as a stop shoulder for the running nut 12. Other means for limiting the movement of the running nut 12 are however also possible, such that the maximum diameter Dₘₐₓ could in alternative embodiments also be defined in another part of the first bolt portion 31, or in the mounting portion 33.

The maximum diameter Dₘₐₓ is larger than the width across flat W_{af}, preferably according to the formula W_{af} x C = Dₘₐₓ, with C being 1.08 or larger, preferably 1.10 or larger.

The tool interface comprises a corner-to-corner width E. The maximum diameter Dₘₐₓ is larger than the corner-to-corner width E to allow for easy fitment.

As can be seen from the embodiment shown in Figs. 1-3 and described herein above, the invention successfully proposes an improved way of conditioning the release bolt 30 for optimal operation while at the same time making it easier to assemble and install on the spring brake actuator as compared to prior art solutions. The innovative release bolt 30 requires less installation parts and reduces the risk of mechanical failures of the system as a consequence thereof, in addition to being more cost efficient.

### List of reference signs (Part of the description)

- 1: commercial vehicle
- 2: spring brake actuator
- 4: actuator housing
- 5: service brake portion
- 6: actuator power spring
- 8: spring brake piston assembly
- 10: pressure chamber
- 12: running nut
- 14: operating section: tool interface
- 16: actuator housing base
- 18: ram
- 20: force application surface
- 22: release bolt passage, actuator housing
- 24: brake release mechanism
- 26: indicator pin
- 28: axial direction
- 30: brake release bolt
- 31: first bolt portion
- 32: second bolt portion
- 33: mounting portion
- 34: threaded portion
- 35: guiding sleeve
- 36: circumferential groove
- 40: retaining element
- 42: boss
- Dₘₐₓ: maximum diameter, release bolt
- W_{af}: width across flat, release bolt

## Claims

1. A brake release mechanism (24) for a spring brake actuator (2), in particular a parking or emergency spring brake actuator (2) for use in a commercial vehicle (1), wherein the spring brake actuator comprises a spring brake piston assembly (8) and an actuator power spring (6) configured to push the spring brake piston assembly from a retracted position towards an extended position, said brake release mechanism (24) comprising:
- a brake release bolt (30) that is configured to be rotatably mounted to the spring brake actuator (2), having a first bolt portion (31) that is configured to extend inside of the spring brake actuator, and a second bolt portion (32) that is configured to extend outside of the spring brake actuator (2),
- said first bolt portion (31) comprising a threaded portion (34), and the second bolt portion (32) comprising an operating section for operating the brake release bolt (30) when mounted to the spring brake actuator (2), and
- a running nut (12) engaging the threaded portion (34), said running nut (12) being configured to axially travel along the threaded portion (34) in order to move a spring brake piston assembly (8) against the actuator power spring (6),
**characterized in that** the operating section is a tool interface (14) that is integrally formed on the brake release bolt (30).

2. The brake release mechanism (24) of claim 1,
**characterized in that** the tool interface (14) comprises a number of force application surfaces (20) that are configured to engage a corresponding torque-inducing tool for driving the release bolt (30), wherein the force application surfaces (20) are formed as recesses in the brake release bolt (30).

3. The brake release mechanism (24) of claim 2,
wherein the tool interface (14) has a polygonal, preferably hexagonal, cross-section.

4. The brake release mechanism of any one of the preceding claims,
wherein the brake release bolt (30) has a mounting portion (33) in between the first bolt portion (31) and the second bolt portion (32), said mounting portion (33) comprising a circumferential groove (36) that is configured to accommodate a retaining element (40) that is effective to axially secure the release bolt (30) to the spring brake actuator (2).

5. The brake release mechanism of claim 4,
**characterized in that** the retaining element (40) is a retaining ring or retaining disc.

6. The brake release mechanism of any one of the preceding claims,
**characterized in that** the tool interface (14) is forged and/or machined.

7. The brake release mechanism of any one of the preceding claims,
**characterized in that** the first bolt portion (31) and/or mounting portion (33) comprises a maximum diameter (Dₘₐₓ) of the release bolt (30), and the tool interface (14) defines a width across flat (W_{af}) that is smaller than the maximum diameter (Dₘₐₓ), wherein preferably, the maximum diameter (Dₘₐₓ) is at least 8% larger than the width across flat (W_{af}), particularly preferred 10% or more.

8. The brake release mechanism of any one of the preceding claims,
**characterized in that** the first bolt portion (31) and/or mounting portion (33) comprises a maximum diameter (Dₘₐₓ) of the release bolt (30), and the tool interface (14) defines a corner-to corner width (E) that is equal to or smaller than the maximum diameter (Dₘₐₓ), wherein the maximum diameter (Dₘₐₓ) is at least 8% larger than the width across flat (W_{af}), preferably 10% or more.

9. A spring brake actuator (2), in particular a parking or emergency spring brake actuator (2) for use in a commercial vehicle (1), said actuator (2) comprising:
- an actuator housing (4) having an actuator housing base (16),
- a spring brake piston assembly (8) located in said actuator housing (4) for applying a braking force,
- an actuator power spring (6) located between the actuator housing base (16) and the spring brake piston assembly (8), said actuator power spring (6) being effective to push the spring brake piston assembly (8) away from the base (5),
**characterized in that** the spring brake piston assembly (8) is coupled to the actuator housing (4) through a brake release mechanism (24) according to any of claims 1-8.

10. The spring brake actuator (2) of claim 9,
**characterized in that** the brake release mechanism (24) is formed according to claim 4 or 5, wherein the mounting portion (33) of the release bolt (30) extends through a correspondingly shaped passage (22) in the actuator housing (4), preferably the actuator housing base (16), and is axially secured to the actuator housing (4) with the retaining element (40).
